# FASCICULE DE BREVET EUROPEEN

(11) **EP 3 887 209 B1**
(45) Date de publication et mention de la délivrance du brevet: **04.01.2023**
(21) Numéro de dépôt: 19805325.8
(22) Date de dépôt: 21.11.2019
(51) Int. Cl.: B60R 16/03, H02J 7/14

(54) **RÉSEAU D'ALIMENTATION ÉLECTRIQUE EMBARQUÉ DANS UN VÉHICULE**
IN EINEM FAHRZEUG INSTALLIERTES STROMVERSORGUNGSSYSTEM
POWER SUPPLY SYSTEM INSTALLED IN A VEHICLE

(30) Priorité: 27.11.2018 FR 1871882
(43) Date de publication de la demande: 06.10.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: SAVEL, Patrick, 78470 St Lambert des bois (FR); STINEAU, Jean Yves, 78180 MONTIGNY-le-BRETONNEUX (FR)
(74) Mandataire: Renault Group
(86) Numéro de dépôt international: PCT/EP2019/082136
(87) Numéro de publication internationale: WO 2020/109140

(56) Documents cités:
- EP-A1- 2 172 371
- EP-A2- 0 417 480
- EP-B1- 1 359 056
- DE-A1-102011 083 582
- DE-A1-102016 103 846
- DE-A1-102016 222 173
- US-A1- 2006 238 938

## Description

L'invention concerne les réseaux d'alimentation électrique embarqués dans des véhicules, notamment des véhicules automobiles.

Le document EP417480A décrit un réseau d'alimentation électrique embarque dans un véhicule comprenant une source d' énergie diélectrique, et au moins deux boîtiers de distribution comprenant chacun :
- un bus de distribution interne connectable ci la ou les sources d' énergie diélectrique;
- au moins deux commutateurs de sortie pour alimenter chacun au moins un consommateur diélectrique distinct du véhicule a partir du bus de distribution interne;
- un processeur de pilotage desdits commutateurs de sortie et un ensemble de fils dialectiques pour relier chaque boîtier de distribution a la ou les sources d'énergie diélectrique. Chaque fil diélectrique est connecté à un et un seul bus de distribution interne. Le réseau comprend un boîtier de couplage branché sur chaque boîtier de distribution.

Généralement de tels réseaux d'alimentation électrique comprennent une ou plusieurs boîtes à fusibles, raccordées en entrée directement ou indirectement à une batterie et un alternateur par des câbles, et raccordées en sortie à différents consommateurs ou groupes de consommateurs électriques par d'autres câbles. Par ailleurs, de nombreux calculateurs embarqués sont à leur tour connectés aux différents consommateurs électriques, par liaison de type bus ou de type filaire, pour en commander et en contrôler le fonctionnement.

Les architectures connues de réseaux d'alimentation électrique, présentent l'inconvénient de nécessiter beaucoup de câbles et fils électriques divers. Elles présentent aussi l'inconvénient d'être peu modulaire. Par exemple des ajouts, suppressions ou modifications de consommateurs électriques peuvent nécessiter de revoir entièrement les schémas de câblage sauf à avoir bien prévu toutes les modifications à venir. Les fusibles de protection présentent aussi l'inconvénient de devoir être remplacés après coupure de circuit par destruction du fusible. Remplacer les fusibles par des disjoncteurs à réarmement comme c'est le cas dans les immeubles d'habitation, présenterait d'autres inconvénients comme par exemple en termes d'encombrement ou encore en termes de pilotage de répartition d'énergie alors que les nombreux modes de fonctionnement d'un véhicule automobile aujourd'hui, ne nécessitent pas tous nécessairement une même répartition d'énergie électrique.

Pour remédier aux inconvénients de l'état antérieur de la technique, l'invention a pour objet un réseau d'alimentation électrique embarqué dans un véhicule selon la revendication 1, comprenant une ou plusieurs sources d'énergie électrique, caractérisé en ce qu'il comporte au moins deux boîtiers de distribution comprenant chacun au moins un bus de distribution interne connectable à la ou lesdites sources d'énergie électrique, au moins deux commutateurs de sortie pour alimenter chacun un consommateur électrique distinct du véhicule à partir du bus de distribution interne, et un processeur de pilotage desdits commutateurs de sortie de manière à répartir une charge de consommation entre les consommateurs électriques en association avec différents modes de fonctionnement du véhicule.

Le réseau de distribution selon l'invention permet de répartir la gestion de consommation électrique du véhicule par ensembles de consommateurs au voisinage de chaque boîtier de distribution, permettant ainsi de réduire, simplifier et mieux contrôler le câblage.

Avantageusement, au moins l'un des commutateurs de sortie comprend au moins deux voies de commutation parallèles reliées en amont au bus de distribution interne par un premier conducteur électrique commun, et reliées en aval par un deuxième conducteur électrique commun à destination de l'un des consommateurs électriques.

Particulièrement, au moins l'un desdits commutateurs de sortie comprend au moins une voie de commutation réalisée par un transistor MOS à puce (smart MOS en anglais).

Avantageusement aussi, le réseau d'alimentation électrique comporte un boîtier de couplage branché sur chaque source d'énergie électrique et un ensemble de fils électriques pour relier chaque boîtier de distribution à chaque boîtier de couplage.

Particulièrement mais non nécessairement lorsque le réseau d'alimentation électrique comprend au moins deux sources d'énergie, chaque boîtier de couplage comprend :
- un sélecteur comprenant plusieurs voies de commutation reliées toutes en amont à un même pôle de source d'énergie, et reliées chacune en aval à un fil électrique sortant du boîtier de couplage ;

- un processeur de commande du sélecteur pour commander et contrôler un état passant de chaque voie reliée à celui des fils électriques auquel est attribué le même pôle de source d'énergie.

Plus particulièrement, plusieurs fils électriques sortant d'un boîtier de couplage sont distribués de manière commune à au moins deux boîtiers de distribution, et chacun des boîtiers comprend :
- un commutateur d'entrée à plusieurs voies de commutation parallèles reliées en amont chacune séparément à l'un desdits fils distribués, reliées en aval de manière groupée, sous-groupée ou individuellement à ou aux bus de distribution interne, un état passant de chaque voie étant commandé et contrôlé par ledit processeur de pilotage

Alternativement, chaque fil électrique sortant d'un boîtier de couplage est connecté à un et un seul bus de distribution interne.

Le réseau d'alimentation électrique est remarquable en ce que les modes de fonctionnement du véhicule, comprennent tout ou partie des modes parmi le mode parking, le mode entretien, le mode logistique, le mode roulage, le mode micro-hybridation, le mode de conduite autonome, et le mode défaut.

Le réseau d'alimentation électrique est remarquable aussi en ce qu'au moins un boîtier de distribution comprend une mémoire contenant des instructions de diagnostic, et à laquelle peut accéder le processeur de pilotage pour réaliser des opérations de diagnostic.

De préférence, le réseau d'alimentation électrique comporte un bus de communication embarqué et un calculateur embarqué central connecté au bus de communication embarqué, de sorte que chaque processeur de pilotage et/ou chaque processeur de commande accède au bus de communication embarqué pour échanger des informations avec le calculateur embarqué central.

Particulièrement, chaque processeur de pilotage et/ou chaque processeur de commande, exécute une procédure de gestion sécuritaire en cas de collision du véhicule ou de perte de communication avec le processeur de pilotage.

Particulièrement aussi, deux boîtiers de distribution comprennent chacun au moins un capteur de tension pour détecter une sous tension et/ou une surtension sur le bus de distribution interne.

L'invention a encore pour objet un véhicule automobile comprenant un réseau d'alimentation électrique reproduisant les caractéristiques essentielles de celui exposé dans la suite de la description.

D'autres avantages et caractéristiques de l'invention apparaîtront à la lecture de la description détaillée de modes de mise en oeuvre et de réalisation, à titre d'exemples illustratifs et non limitatif, en référence aux dessins annexés dans lesquels :
[Fig. 1] illustre un véhicule automobile comprenant une première mise en œuvre de réseau d'alimentation électrique conforme à l'invention ;
[Fig. 2] illustre un véhicule automobile comprenant une deuxième mise en œuvrede réseau d'alimentation électrique conforme à l'invention ;
[Fig. 3] montre une première variante de réseau d'alimentation électrique conforme à l'invention ;
[Fig. 4] montre un premier boîtier de distribution utilisable dans la première variante de réseau d'alimentation électrique ;
[Fig. 5] montre une deuxième variante de réseau d'alimentation électrique conforme à l'invention ;
[Fig. 6] montre un deuxième boîtier de distribution utilisable dans la deuxième variante de réseau d'alimentation électrique ;
[Fig. 7] montre un troisième boîtier de distribution utilisable dans la deuxième variante de réseau d'alimentation électrique .

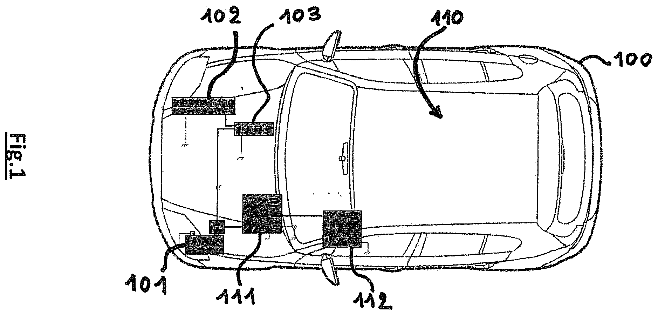

En référence à [Fig. 1], un véhicule, notamment un véhicule automobile 100 comprend un réseau d'alimentation électrique 110 embarqué. Le réseau d'alimentation électrique 110 comprend une source d'énergie électrique 101, constituée essentiellement par une batterie 12V. La batterie 12v est par exemple de type plomb-acide ou de type lithium-ion. Le réseau d'alimentation électrique 110 embarqué comporte deux boîtiers de distribution 111, 112.

Le boîtier de distribution 111, localisé dans le compartiment moteur (CMO), est connecté à la batterie 101 à laquelle est connecté un démarreur 103, lui-même connecté à un alternateur 102 qui peut constituer une autre source d'énergie électrique. Le boîtier de distribution 111 est par exemple situé à l'avant gauche (AVG) lorsque le moteur est situé à l'avant du véhicule. Le boîtier de distribution 111 distribue la tension de la ou des sources d'énergie électrique à laquelle ou auxquelles il est connecté, vers des consommateurs électriques principalement situés dans le compartiment moteur.

Le boîtier de distribution 112, localisé dans l'habitacle, typiquement dans la planche de bord (Pdb) est connecté au boîtier de distribution 111 pour distribuer à son tour l'énergie électrique vers des consommateurs électriques principalement situés dans le reste du véhicule.

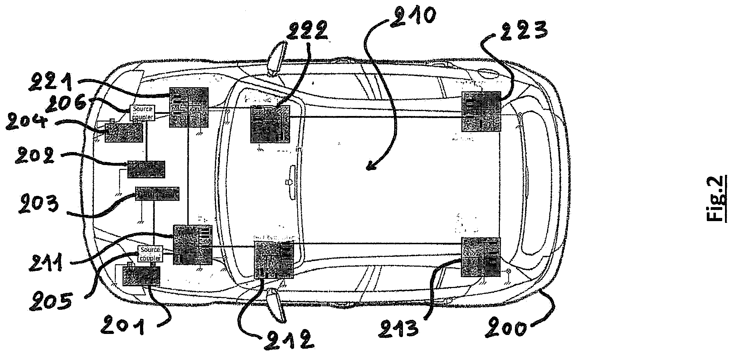

En référence à [Fig. 2], le véhicule automobile 200 comprend un réseau d'alimentation électrique 200 embarqué. Le réseau d'alimentation électrique 210 comprend trois sources d'énergie électrique 201, 202, 204 constituées essentiellement par une batterie principale 12V, une batterie secondaire 12V, et par un alternateur ou un alternodémarreur de type BSG. Les sources d'énergies sont connectées au réseau 12V via deux boitiers coupleurs de sources qui permettent la connexion ou la déconnexion des sources d'énergie au réseau de bord 12V. Le réseau d'alimentation électrique 210 embarqué comporte six boîtiers de distribution 211, 212, 213, 221, 222, 223.

La batterie principale 201 et le démarreur 203 sont connectées à un premier coupleur de source 205. La batterie secondaire 204 et l'alternateur ou BSG 202 sont connectées à un second coupleur de source 206. Le boîtier de distribution 211 est par exemple situé à l'avant gauche (AVG) lorsque le moteur est situé à l'avant du véhicule. Le boîtier de distribution 211 est aussi connecté au boîtier de distribution 221, de manière à distribuer la tension des sources d'énergie électrique auxquelles ils sont connectés, vers des consommateurs électriques principalement situés dans le compartiment moteur.

Les boîtiers de distribution 212, 222 localisés en partie avant de l'habitacle, typiquement dans la planche de bord (Pdb) sont connectés respectivement au boîtier de distribution 211 et au boîtier de distribution 221, pour distribuer à leur tour l'énergie électrique vers des consommateurs électriques principalement situés en partie avant du véhicule.

Les boîtiers de distribution 213, 223 localisés en partie arrière du véhicule, respectivement à gauche (ARG) et à droite (ARD), sont connectés respectivement au boîtier de distribution 212 et au boîtier de distribution 222, pour distribuer à leur tour l'énergie électrique vers des consommateurs électriques principalement situés en partie arrière du véhicule.

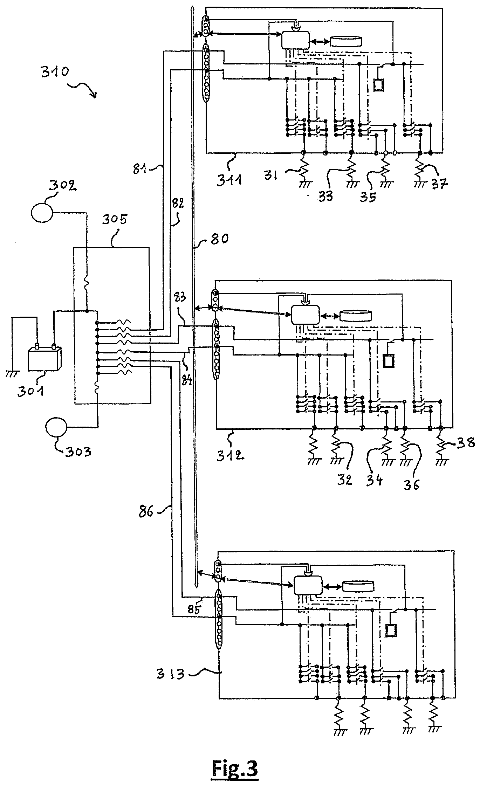

En référence à [Fig. 3], les réseaux d'alimentation électrique 110, 210 peuvent être réalisés plus précisément sous forme d'un réseau d'alimentation électrique 310 qui comprend, à titre d'exemple purement illustratif trois boîtiers de distribution 311, 312, 313. Les explications données ci-après restent valables pour un nombre quelconque de boîtiers de distribution compris entre deux comme sur la figure 1 et six comme sur la figure 2, voire au-delà.

Les boîtiers de distribution 311, 312, 313 sont connectés à une source d'énergie électrique constituée par une batterie 301 branchée en parallèle avec un producteur d'énergie 12V (Alternateur, alternodémarreur, DCDC, ...) 303 sur un ensemble de fils électriques 81, 82, 83, 84, 85, 86, un ou plusieurs fils permettant de relier chacun des boîtiers à la source d'énergie électrique.

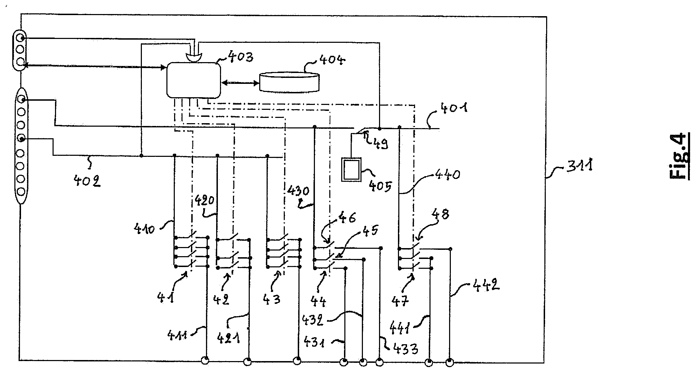

Les boîtiers de distribution 312, 313, sont semblables au boîtier de distribution 311 maintenant décrit en référence à [Fig. 4].

Le boîtier de distribution 311 comprend un bus de distribution interne 401 qu'il suffit de relier au fil électrique 81 pour le connecter à la source d'énergie électrique constituée par la batterie 301 branchée en parallèle avec le producteur d'énergie 12V 303.

Plusieurs commutateurs de sortie 44, 45, 46, 48, comprennent chacun une voie de commutation reliées en amont au bus de distribution interne 401 par un conducteur électrique 430, 440 et reliée chacune en aval par un deuxième conducteur électrique 431, 432, 433, 442, à une borne ou à une fiche de connecteur distincte à destination de l'un des consommateurs électriques. Par exemple on peut voir sur la figure 3 que le commutateur 45 permet d'alimenter un consommateur 35 à partir du bus de distribution interne 401.

Le commutateur de sortie 47 comprend deux voies de commutation parallèles reliées en amont au bus de distribution interne 401 par le conducteur électrique commun 440, et reliées en aval par un deuxième conducteur électrique commun 441 à destination du consommateur électrique 37. Le commutateur de sortie 47 permet ainsi d'alimenter le consommateur électrique 37 à partir du bus de distribution interne 401 avec un courant électrique plus élevé que le commutateur 45 ne le permet pour alimenter le consommateur électrique 35.

Le boîtier de distribution 311 comprend dans cet exemple, aussi un bus de distribution interne 402 qu'il suffit de relier au fil électrique 82 pour le connecter à la source d'énergie électrique constituée par la batterie 301 et le producteur d'énergie 303.

Les commutateurs de sortie 41, 42 et 43 comprennent chacun trois ou quatre voies de commutation parallèles reliées en amont au bus de distribution interne 402 par un premier conducteur électrique commun 410, 420 et reliées en aval par un deuxième conducteur électrique commun 411, 421 à destination de consommateurs électriques distincts. Avec une voie de commutation de plus que le commutateur 42, le commutateur de sortie 41 permet d'alimenter un consommateur électrique 31 à partir du bus de distribution interne 402 avec un courant électrique plus élevé que le commutateur 42 ne le permet pour alimenter un consommateur électrique 32.

La mise en parallèle de plusieurs voies de commutation pour un même commutateur, est particulièrement utile pour réaliser les commutateurs au moyen de transistor MOS (Métal Oxyde Semiconducteur), par exemple de transistors à effet de champ à grille métal-oxyde. Les transistors MOS ont l'avantage d'avoir des temps de réponse très courts, appréciables dans le domaine de la sécurité automobile. Cependant, la faible tension d'alimentation de l'ordre de 12 V dans un véhicule automobile, engendre des valeurs de courant élevées pour satisfaire la puissance d'appel d'un consommateur électrique. La répartition du courant dans plusieurs voies de commutation en parallèle, permet de satisfaire un appel de courant en faisant traverser chaque transistor par un courant plus faible.

Un processeur de pilotage 403 commande à l'ouverture et à la fermeture la voie de commutation unique de chaque commutateur de sortie 44, 45, 48, ou simultanément toutes les voies de commutation de chacun des commutateurs de sortie 41, 42, 43, 47, de manière à répartir une charge de consommation entre les consommateurs électriques en association avec différents modes de fonctionnement du véhicule.

La réalisation d'une voie de commutation au moyen d'un transistor MOS à puce (Smart MOS) permet de gérer localement des températures, des valeurs de courant, des valeurs de tension, et de communiquer avec le processeur de pilotage, tant en termes de contrôle-commande que d'instrumentation.

La puce associée au transistor MOS de puissance, peut comporter une sonde de température de la jonction du transistor MOS et un microprocesseur apte à lire une valeur de température mesurée par la sonde et à rendre le transistor MOS boquant, de façon à ouvrir la voie de commutation pour protéger le transistor MOS de puissance en cas de surchauffe de sa jonction interne, par exemple dès que la température mesurée atteint ou dépasse 150 °C. La puce associée au transistor MOS de puissance, peut aussi comporter une sonde de courant électrique traversant la jonction du transistor MOS accessible au microprocesseur qui pilote le transistor MOS en le rendant boquant, de façon à ouvrir la voie de commutation pour protéger le transistor MOS de puissance en cas de surintensité traversant sa jonction interne. Il est possible aussi de programmer le microprocesseur pour limiter le courant à une valeur maximale paramétrable pendant un court instant de façon à autoriser certains comportements transitoires. La puce associée au transistor MOS de puissance, peut encore comporter une sonde de tension en sortie de la jonction du transistor MOS. Le microprocesseur peut ouvrir la voie de commutation en commandant le transistor MOS à l'état boquant, pour mettre le transistor MOS de puissance en protection cas de dépassement d'un seuil de tension paramétrable. La puce est équipée d'interfaces numériques et/ou analogique pour recevoir des instructions de commande en provenance du processeur de pilotage, et pour communiquer au processeur de pilotage des données relatives à la température, l'ampérage, la tension en temps réel et à des alertes de dépassement de seuil.

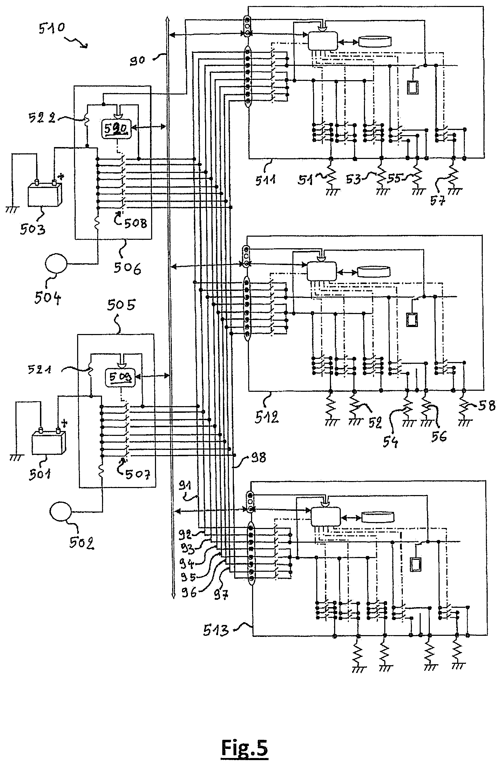

En référence à [Fig. 5], on peut aussi réaliser les réseaux d'alimentation électrique 110, 210 ou d'autres réseaux d'alimentation embarqués sous forme d'un réseau d'alimentation électrique 510 qui comprend, ici encore à titre d'exemple purement illustratif trois boîtiers de distribution 511, 512, 513.

Le réseau d'alimentation électrique 510 se distingue essentiellement du réseau d'alimentation électrique 310 en qu'il comprend deux sources d'énergie électrique. Une première source d'énergie électrique est constituée est constituée par une batterie 503 principale, branchée en parallèle avec un démarreur 504 en amont d'un premier boîtier de couplage 506. Une deuxième source d'énergie électrique est constituée par une batterie additionnelle 503 de secours, branchée en parallèle avec un démarreur 504 en amont d'un deuxième boîtier de couplage 506.

Chaque boîtier de couplage 505, 506 comprend respectivement un sélecteur 507, 508 comprenant plusieurs voies de commutation, huit dans l'exemple illustratif de la figure 5, reliées chacune en aval à un fil électrique sortant du boîtier de couplage. Chacun des fils électriques sortant du boîtier de couplage 505 est relié, par exemple ici par épissure, à un fil électrique 91, 92, 93, 94, 95, 96, 97, lui-même relié à un fil électrique du boîtier de couplage 506. Les voies de commutation du sélecteur 507 sont reliées toutes en amont à un même pôle + de la batterie 501. Les voies de commutation du sélecteur 508 sont reliées toutes en amont à un même pôle + de la batterie 503.

Un processeur de commande 509 du sélecteur 507 permet de commander et contrôler un état passant, respectivement bloquant, de chaque voie reliée à celui des fils électriques auquel est attribué le pôle + de la source d'énergie constituée par la batterie 501 et/ou le producteur d'énergie 502, respectivement n'est pas attribué le pôle + de la source d'énergie.

Un processeur de commande 520 du sélecteur 508 permet de commander et contrôler un état passant, respectivement bloquant, de chaque voie reliée à celui des fils électriques auquel est attribué le pôle + de la source d'énergie constituée par la batterie 503, respectivement n'est pas attribué le pôle + de la source d'énergie.

Les deux processeurs 509, 520 communiquent entre eux au moyen d'un bus de communication embarqué 90, de façon à commander les voies de commutation de chaque sélecteur 507, 508 pour que chaque fil électrique 91, 92, 93, 94, 95, 96, 97, soit mis de préférence au potentiel électrique d'au plus une source d'énergie électrique. Par exemple en mode de fonctionnement secours du véhicule, le processeur 509 commande toutes les voies du sélecteur 507 à l'état bloquant pendant que le processeur 520 commande toutes les voies du sélecteur 508 à l'état passant de sorte que le réseau d'alimentation électrique 510 soit alimenté uniquement par la deuxième source d'énergie. Par exemple en mode de fonctionnement à répartition d'énergie du véhicule, le processeur 509 commande à l'état passant les voies du sélecteur 507 qui sont reliées aux fils électriques 91, 92, 93, et à l'état bloquant les voies du sélecteur 507 qui sont reliées aux fils électriques 94, 95, 96, 97, 98 pendant que le processeur 520 commande à l'état bloquant les voies du sélecteur 508 qui sont reliées aux fils électriques 91, 92, 93, et à l'état passant les voies du sélecteur 508 qui sont reliées aux fils électriques 94, 95, 96, 97, 98 de sorte que le réseau d'alimentation électrique 510 soit alimenté de manière partagée par la première source d'énergie. On peut aussi envisager des commandes à l'état passant de tout ou partie de voies de commutation identiques des deux sélecteurs 507, 508, par exemple pour recharger la batterie additionnelle 503 à partir du producteur d'énergie 502.

Les processeurs 509, 520, sont alimentés chacun en amont respectivement du sélecteur 507, 508 de manière protégée par un fusible 521, 522, et/ou en aval respectivement du sélecteur 507, 508 de manière protégée par l'une des voies de commutation.

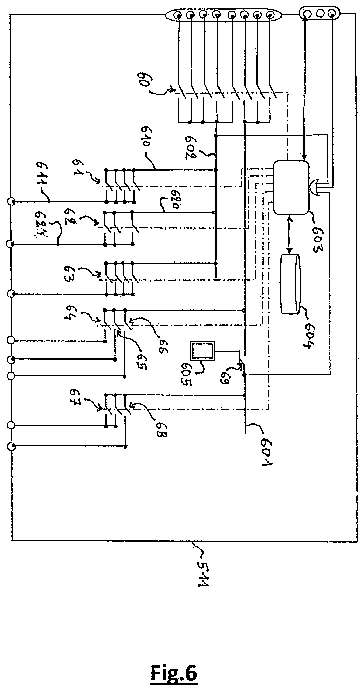

Dans un mode de réalisation alternatif, les boîtiers de distribution 512, 513, sont semblables au boîtier de distribution 511 maintenant décrit en référence à [Fig. 6].

Le boîtier de distribution 511 comprend un ou deux bus de distribution interne 601, 602 comparables au ou aux bus de distribution interne 401, 402.

Plusieurs commutateurs de sortie 64, 65, 66, 67, 68, comprennent chacun une ou deux voies de commutation reliées en amont au bus de distribution interne 601 de manière comparable aux commutateurs de sortie 44, 45, 46, 47, 48 pour alimenter les consommateur 54, 55, 56, 57, 58 à partir du bus de distribution interne 601.

Le boîtier de distribution 511 comprend dans cet exemple, aussi un bus de distribution interne 602. Les commutateurs de sortie 61, 62 et 63 comprennent chacun trois ou quatre voies de commutation parallèles reliées en amont au bus de distribution interne 602 par un premier conducteur électrique commun 610, 620 et reliées en aval par un deuxième conducteur électrique commun 611, 621 à destination de consommateurs électriques distincts. Avec une voie de commutation de plus que le commutateur 62, le commutateur de sortie 61 permet d'alimenter un consommateur électrique 51 à partir du bus de distribution interne 602 avec un courant électrique plus élevé que le commutateur 62 ne le permet pour alimenter un consommateur électrique 53.

La mise en parallèle de plusieurs voies de commutation pour un même commutateur, est particulièrement utile pour réaliser les commutateurs au moyen de transistor MOS (Métal Oxyde Semiconducteur), par exemple de transistors à effet de champ à grille métal-oxyde ou de Smart-MOS^{™}, comme pour les commutateurs du boîtier 311.

Un processeur de pilotage 603 commande à l'ouverture et à la fermeture la voie de commutation unique de chaque commutateur de sortie 64, 65, 68, ou simultanément toutes les voies de commutation de chacun des commutateurs de sortie 61, 62, 63, 67, de manière à répartir une charge de consommation entre les consommateurs électriques en association avec les différents modes de fonctionnement du véhicule.

Cependant, alors que le boîtier 311 convient mieux à un réseau d'alimentation électrique dans lequel chaque fil électrique sortant du boîtier de couplage 305, 505, 506, est connecté à un et un seul bus de distribution interne, le boîtier 511 représenté en figure 6 est mieux adapté à un réseau d'alimentation électrique dans lequel plusieurs fils électriques sortant du boîtier de couplage 305, 505, 506, sont distribués de manière commune à au moins deux boîtiers de distribution 511, 512, 513 semblables.

Les boîtiers 512, 513 identiques au boîtier 511 représenté en figure 6, diffèrent essentiellement du boîtier 311 en ce que chacun comprend un commutateur d'entrée 60 à plusieurs voies de commutation parallèles reliées en amont chacune séparément à l'un des fils distribués 91, 92, 93, 94, 95, 96, 97, 98, reliées en aval de manière groupée, sous-groupée ou individuellement au ou aux bus de distribution interne 601, 602. Le processeur de pilotage 603 commande et contrôle un état passant et un état bloquant de chaque voie de manière à déterminer lequel ou lesquels d'un premier ensemble de fils électriques 91, 92, 93 est connecté ou non connecté au bus de distribution interne 601, et lequel ou lesquels d'un deuxième ensemble de fils électriques 94, 95, 96 est connecté ou non connecté au bus de distribution interne 602.

Des boîtiers 311, 312, 313 identiques au boîtier 511 représenté en figure 6, peuvent être utilisés dans le réseau 310 pour partager chaque conducteur 81 à 86 avec chaque boîtier 311, 312, 313. En d'autres termes, on peut aussi utiliser des boîtiers identiques au boîtier 511 en présence d'une seule source d'énergie électrique.

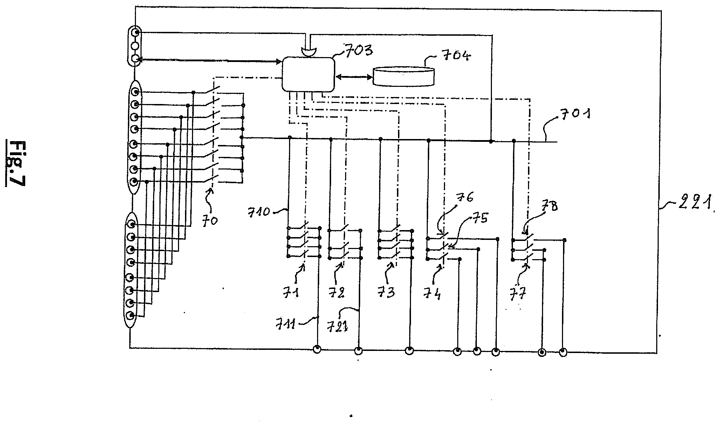

Dans un autre mode de réalisation alternatif, les boîtiers de distribution 211, 212, 213, 221, 222, 223, sont semblables au boîtier de distribution 221 maintenant décrit en référence à [Fig. 7].

Le boîtier de distribution illustré en figure 7 comprend un bus de distribution interne unique 701 auquel sont reliés plusieurs commutateurs 71, 72, 73, 74, 75, 76, 77, 78 avec des états ouverts et fermés qui sont commandés et contrôlés par un processeur 703. Certains commutateurs 74, 75, 76, 78, sont à une seule voie de commutation. Certains commutateurs 71, 72, 73, 77, sont à au moins deux voies de commutation. Par exemple, le commutateur de sortie 71 comprend quatre voies de commutation parallèles reliées en amont au bus de distribution interne 701 par un premier conducteur électrique commun 710, et reliées en aval par un deuxième conducteur électrique commun 711 à destination de l'un des consommateurs électriques. Par exemple encore, le commutateur de sortie 72 comprend trois voies de commutation parallèles reliées en amont au bus de distribution interne 701 par un premier conducteur électrique commun, et reliées en aval par un deuxième conducteur électrique commun 721 à destination d'un autre des consommateurs électriques.

De manière comparable au boîtier 511 représenté en figure 6, le boîtier de distribution 221 représenté en figure 7 comprend un commutateur d'entrée 70 à plusieurs voies de commutation parallèles pour être reliées en amont chacune séparément par exemple à l'un des fils distribués 91, 92, 93, 94, 95, 96, 97, 98, et reliées en aval de manière groupée, au bus de distribution interne 701. Le processeur de pilotage 703 commande et contrôle un état passant et un état bloquant de chaque voie de manière à déterminer lequel ou lesquels de l'ensemble de fils électriques 91, 92, 93, 94, 95, 96 est connecté ou non connecté au bus de distribution interne 701.

De manière différente du boîtier 511 représenté en figure 6, le boîtier de distribution 221 représenté en figure 7 comprend deux connecteurs d'entrée à chacun desquels est relié l'amont de chacune des voies de commutation du commutateur d'entrée 70. Le premier connecteur permet au boîtier de distribution 221 de se mettre au potentiel électrique délivré par une source d'énergie électrique ou délivré par un autre boîtier de distribution. Le deuxième connecteur permet au boîtier de distribution 221 de délivrer à un autre boîtier de distribution, le potentiel électrique auquel il est mis sur le premier connecteur. Le double connecteur permet d'éviter de pratiquer des épissures sur les câbles reliant les boîtiers de distribution électrique.

Les boîtiers de distribution 311, 511, 221, comprennent respectivement une mémoire 404, 604, 704, à laquelle accède le processeur 403, 603, 703 pour y écrire des données, et pour y lire des données ou exécuter des instructions informatiques qui y sont mémorisées.

Les données à écrire en mémoire peuvent provenir du bus de communication embarqué 80, 90 auquel sont connectés les processeurs des boîtiers de connexion. Les données à écrire en mémoire peuvent aussi provenir de l'exécution des instructions informatiques mémorisées ou de signaux de mesure sur le réseau d'alimentation électrique. Par exemple, deux boîtiers de distribution comprennent chacun un capteur de tension pour détecter une sous tension et/ou une surtension sur le bus de distribution interne. La mémoire peut aussi contenir des instructions de diagnostic, auxquelles peut accéder le processeur de pilotage pour réaliser des opérations de diagnostic.

Un calculateur embarqué central (non représenté) peut avantageusement être connecté au bus de communication embarqué 80, 90, gérer différents modes de fonctionnement du véhicule, comprenant tout ou partie des modes parmi le mode parking, le mode entretien, le mode logistique, le mode roulage, le mode micro-hybridation, le mode de conduite autonome, et le mode défaut.

Chaque processeur de pilotage 303, 503 dans un boîtier de distribution 311, 511, et/ou chaque processeur de commande 509, 520 accède au bus de communication embarqué 80, 90 pour échanger des informations avec le calculateur embarqué central, notamment pour recevoir des instructions de répartition d'énergie électrique entre les différents consommateurs électriques raccordés à chaque boîtier de distribution.

Chaque processeur de pilotage 403, 603, 703, et/ou chaque processeur de commande 509, 520 peut aussi recevoir par le bus de communication embarqué ou directement par des fils dédiés, une alerte de détection de collision du véhicule, de façon à exécuter une procédure de gestion sécuritaire en cas de collision du véhicule. La procédure de gestion sécuritaire, par exemple stockée en mémoire 404, 604, 704, peut consister à rendre bloquant tout ou partie des commutateurs 41 à 48 ou à rendre bloquant tout ou partie des voies de commutation du commutateur d'entrée 60, 70. Un micro-relais 49, 69, avec contact à manque déconnectant une partie extrême du bus 401, 601 des fils électriques 81, 91, 92, 93 en entrée, de manière à connecter la partie extrême de bus sur une pile ou mini-batterie 405, 605, permet d'alimenter le processeur 403, 603 en absence de mise au potentiel de l'une des sources d'énergie électrique. On peut prévoir dans la procédure sécuritaire de maintenir passant un nombre restreint de commutateurs de sorties 47, 48, 67, 68 branchés en extrémité de bus 401, 601.

Pour effectuer des modifications de logiciel à la volée (FOTA) il est intéressant d'agencer chaque boîtier de distribution pour vérifier si les consommateurs électriques impactés par une modification de micrologiciel à la volée, sont connectés ou non à ses sorties. Il est possible de mettre en œuvrece type de vérifications au moyen de tables associative stockées en mémoire 404, 604.

## Revendications

1. Réseau d'alimentation électrique (110, 210, 310, 510) embarqué dans un véhicule (100, 200) comprenant plusieurs sources d'énergie électrique (101, 102, 201, 202, 301, 302, 501, 502, 503), comportant au moins deux boîtiers de distribution (111, 112, 211, 212, 213, 221, 222, 223, 311, 312, 313, 511, 512, 513) comprenant chacun :
- au moins un bus (401, 402, 601, 602, 701) de distribution interne connectable auxdites sources d'énergie électrique ;
- au moins deux commutateurs de sortie (41, 42, 61, 62, 71, 72) pour alimenter chacun au moins un consommateur électrique (31, 32, 51, 52) distinct du véhicule à partir du bus de distribution interne ;
- un processeur de pilotage (403, 603, 703) desdits commutateurs de sortie de manière à répartir une charge de consommation entre les consommateurs électriques en association avec différents modes de fonctionnement du véhicule, le réseau comportant un boîtier de couplage (305, 505, 506) branché sur chaque source d'énergie électrique et un ensemble de fils électriques (81-86, 91-98) pour relier chaque boîtier de distribution (311-313, 511-513) à chaque boîtier de couplage (305, 505, 506), le réseau étant **caractérisé en ce que** chaque boîtier de couplage (505, 506) comprend :
- un sélecteur (507, 508) comprenant plusieurs voies de commutation reliées toutes en amont à un même pôle (+) de source d'énergie (501, 503), et reliées chacune en aval à un fil électrique sortant du boîtier de couplage ;
- un processeur de commande (509, 520) du sélecteur pour commander et contrôler un état passant non-passant de chaque voie reliée à celui des fils électriques auquel est attribué ledit même pôle de source d'énergie.

2. Réseau d'alimentation électrique selon la revendication 1, **caractérisé en ce qu'**au moins l'un desdits commutateurs de sortie (41, 42, 61, 62, 71, 72) comprend au moins deux voies de commutation parallèles reliées en amont au bus de distribution interne par un premier conducteur électrique commun (410, 420, 610, 620, 710, 720), et reliées en aval par un deuxième conducteur électrique commun (411, 421, 611, 621, 711, 721) à destination de l'un des consommateurs électriques.

3. Réseau d'alimentation électrique selon l'une des revendications 1 ou 2, **caractérisé en ce qu'**au moins l'un desdits commutateurs de sortie comprend au moins une voie de commutation réalisée par un transistor MOS à puce.

4. Réseau d'alimentation électrique selon l'une des revendications 1 à 3, **caractérisé en ce que** chaque fil électrique sortant d'un boîtier de couplage est connecté à un et un seul bus de distribution interne.

5. Réseau d'alimentation électrique (510) selon l'une des revendications 1 à 3, **caractérisé en ce que** plusieurs fils électriques sortant d'un boîtier de couplage sont distribués de manière commune à au moins deux boîtiers de distribution (511, 512, 513), et **en ce que** chacun desdits au moins deux boîtiers comprend :
- un commutateur d'entrée (60, 70) à plusieurs voies de commutation parallèles reliées en amont chacune séparément à l'un desdits fils distribués (91-98), reliées en aval de manière groupée, sous-groupée ou individuellement à ou aux bus de distribution interne (601-602, 701), un état passant de chaque voie étant commandé et contrôlé par ledit processeur de pilotage (603, 703).

6. Réseau d'alimentation électrique selon l'une des revendications précédentes, **caractérisé en ce que** les modes de fonctionnement du véhicule, comprennent tout ou partie des modes parmi le mode parking, le mode entretien, le mode logistique, le mode roulage, le mode micro-hybridation, le mode de conduite autonome, et le mode défaut.

7. Réseau d'alimentation électrique selon l'une des revendications précédentes, **caractérisé en ce qu'**au moins un boîtier de distribution (311, 511, 221) comprend une mémoire (404, 604, 704) contenant des instructions de diagnostic, et à laquelle peut accéder le processeur de pilotage (403, 603) pour réaliser des opérations de diagnostic.

8. Réseau d'alimentation électrique selon l'une des revendications précédentes, **caractérisé en ce qu'**il comporte un bus de communication embarqué (80, 90), et un calculateur embarqué central connecté au bus de communication embarqué, et **en ce que** chaque processeur de pilotage (403, 603, 703) et/ou chaque processeur de commande (509, 520) accède au bus de communication embarqué pour échanger des informations avec le calculateur embarqué central.

9. Réseau d'alimentation électrique selon l'une des revendications précédentes, **caractérisé en ce que** chaque processeur de pilotage (403, 603, 703) et/ou chaque processeur de commande (509, 520), exécute une procédure de gestion sécuritaire en cas de collision du véhicule ou de perte du bus de communication.

10. Réseau d'alimentation électrique selon l'une des revendications précédentes, **caractérisé en ce qu'**au moins deux boîtiers de distribution (311, 312) comprennent chacun un capteur de tension pour détecter une sous tension et/ou une surtension sur le bus de distribution interne (401, 402).

11. Véhicule automobile (100, 200) comprenant un réseau d'alimentation électrique (110, 210) selon l'une des revendications précédentes.

## Patentansprüche

1. Stromversorgungsnetz (110, 210, 310, 510) an Bord eines Fahrzeugs (100, 200), das mehrere Stromquellen (101, 102, 201, 202, 301, 302, 501, 502, 503) enthält, das mindestens zwei Verteilergehäuse (111, 112, 211, 212, 213, 221, 222, 223, 311, 312, 313, 511, 512, 513) aufweist, die je enthalten
- mindestens einen inneren Verteilerbus (401, 402, 601, 602, 701), der mit den Stromquellen verbindbar ist;
- mindestens zwei Ausgangsschalter (41, 42, 61, 62, 71, 72), um je mindestens einen unterschiedlichen Stromverbraucher (31, 32, 51, 52) des Fahrzeugs ausgehend von dem inneren Verteilerbus zu speisen;
- einen Steuerungsprozessor (403, 603, 703) der Ausgangsschalter, um eine Verbrauchslast zwischen den Stromverbrauchern in Verbindung mit verschiedenen Betriebsmodi des Fahrzeugs zu verteilen, wobei das Netz ein Kopplungsgehäuse (305, 505, 506), das an jede Stromquelle angeschlossen ist, und eine Einheit von Stromkabeln (81-86, 91-98) aufweist, um jedes Verteilergehäuse (311-313, 511-513) mit jedem Kopplungsgehäuse (305, 505, 506) zu verbinden,
wobei das Netz **dadurch gekennzeichnet ist, dass** jedes Kopplungsgehäuse (505, 506) enthält:
- einen Wählschalter (507, 508), der mehrere Schaltkanäle enthält, die alle stromaufwärts mit einem gleichen Pol (+) einer Stromquelle (501, 503) verbunden sind, und die je stromabwärts mit einem aus dem Kopplungsgehäuse austretenden Stromkabel verbunden sind;
- einen Steuerprozessor (509, 520) des Wählschalters, um einen leitenden - nicht leitenden Zustand jedes Kanals zu steuern und zu kontrollieren, der mit demjenigen der Stromkabel verbunden ist, dem der gleiche Stromquellenpol zugewiesen ist.

2. Stromversorgungsnetz nach Anspruch 1, **dadurch gekennzeichnet, dass** mindestens einer der Ausgangsschalter (41, 42, 61, 62, 71, 72) mindestens zwei parallele Schaltkanäle enthält, die stromaufwärts mit dem inneren Verteilerbus durch einen ersten gemeinsamen elektrischen Leiter (410, 420, 610, 620, 710, 720) verbunden sind, und stromabwärts durch einen zweiten gemeinsamen elektrischen Leiter (411, 421, 611, 621, 711, 721) verbunden sind, der für einen der Stromverbraucher bestimmt ist.

3. Stromversorgungsnetz nach einem der Ansprüche 1 oder 2, **dadurch gekennzeichnet, dass** mindestens einer der Ausgangsschalter mindestens einen Schaltkanal enthält, der von einem Chip-MOS-Transistor realisiert wird.

4. Stromversorgungsnetz nach einem der Ansprüche 1 bis 3, **dadurch gekennzeichnet, dass** jedes aus einem Kopplungsgehäuse austretende Stromkabel mit einem einzigen inneren Verteilerbus verbunden ist.

5. Stromversorgungsnetz (510) nach einem der Ansprüche 1 bis 3, **dadurch gekennzeichnet, dass** mehrere aus einem Kopplungsgehäuse austretende Stromkabel gemeinsam an mindestens zwei Verteilergehäuse (511, 512, 513) verteilt werden, und dass jedes der mindestens zwei Gehäuse enthält:
- einen Eingangsschalter (60, 70) mit mehreren parallelen Schaltkanälen, die stromaufwärts je getrennt mit einem der verteilten Kabel (91-98) verbunden sind, stromabwärts gruppiert, teilgruppiert oder einzeln mit dem oder den inneren Verteilerbussen (601-602, 701) verbunden sind, wobei ein leitender Zustand jedes Kanals vom Steuerungsprozessor (603, 703) gesteuert und kontrolliert wird.

6. Stromversorgungsnetz nach einem der vorhergehenden Ansprüche, **dadurch gekennzeichnet, dass** die Betriebsmodi des Fahrzeugs alle oder einen Teil der Modi unter dem Parkmodus, dem Wartungsmodus, dem Logistikmodus, dem Fahrmodus, dem Mikrohybridisierungsmodus, dem autonomen Fahrmodus und dem Standardmodus enthalten.

7. Stromversorgungsnetz nach einem der vorhergehenden Ansprüche, **dadurch gekennzeichnet, dass** mindestens ein Verteilergehäuse (311, 511, 221) einen Speicher (404, 604, 704) umfasst, der Diagnoseanweisungen enthält, und auf den der Steuerungsprozessor (403, 603) zugreifen kann, um Diagnosevorgänge durchzuführen.

8. Stromversorgungsnetz nach einem der vorhergehenden Ansprüche, **dadurch gekennzeichnet, dass** es einen bordseitigen Kommunikationsbus (80, 90) und einen bordseitigen Zentralrechner aufweist, der mit dem bordseitigen Kommunikationsbus verbunden ist, und dass jeder Steuerungsprozessor (403, 603, 703) und/oder jeder Steuerprozessor (509, 520) auf den bordseitigen Kommunikationsbus zugreift, um Informationen mit dem bordseitigen Zentralrechner auszutauschen.

9. Stromversorgungsnetz nach einem der vorhergehenden Ansprüche, **dadurch gekennzeichnet, dass** jeder Steuerungsprozessor (403, 603, 703) und/oder jeder Steuerprozessor (509, 520) im Fall einer Kollision des Fahrzeugs oder eines Verlusts des Kommunikationsbusses ein Sicherheitsmanagementverfahren ausführt.

10. Stromversorgungsnetz nach einem der vorhergehenden Ansprüche, **dadurch gekennzeichnet, dass** mindestens zwei Verteilergehäuse (311, 312) je einen Spannungssensor enthalten, um eine Unterspannung und/oder eine Überspannung auf dem inneren Verteilerbus (401, 402) zu erfassen.

11. Kraftfahrzeug (100, 200), das ein Stromversorgungsnetz (110, 210) nach einem der vorhergehenden Ansprüche enthält.

## Claims

1. Onboard electrical power supply network (110, 210, 310, 510) in a vehicle (100, 200) comprising a plurality of electrical energy sources (101, 102, 201, 202, 301, 302, 501, 502, 503), comprising at least two distribution boxes (111, 112, 211, 212, 213, 221, 222, 223, 311, 312, 313, 511, 512, 513) each comprising:
- at least one internal distribution bus (401, 402, 601, 602, 701) that can be connected to said electrical energy sources;
- at least two output switches (41, 42, 61, 62, 71, 72) each for supplying power to at least one electrical consumer (31, 32, 51, 52) distinct from the vehicle from the internal distribution bus;
- a driver processor (403, 603, 703) for driving said output switches so as to distribute a consumption load between the electrical consumers in association with different operating modes of the vehicle, the network comprising a coupling box (305, 505, 506) connected to each electrical energy source and a set of electrical wires (81-86, 91-98) to connect each distribution box (311-313, 511-513) to each coupling box (305, 505, 506), the network being **characterized in that** each coupling box (505, 506) comprises:
- a selector (507, 508) comprising a plurality of switching paths all connected upstream to the same pole (+) of an energy source (501, 503), and each connected downstream to an electrical wire exiting the coupling box;
- a control processor (509, 520) for controlling the selector in order to control and monitor an on/off state of each path connected to that of the electrical wires to which said same energy source pole is assigned.

2. Electrical power supply network according to Claim 1, **characterized in that** at least one of said output switches (41, 42, 61, 62, 71, 72) comprises at least two parallel switching paths connected upstream to the internal distribution bus by a first common electrical conductor (410, 420, 610, 620, 710, 720), and connected downstream by a second common electrical conductor (411, 421, 611, 621, 711, 721) to one of the electrical consumers.

3. Electrical power supply network according to either of Claims 1 and 2, **characterized in that** at least one of said output switches comprises at least one switching path formed by a smart MOS transistor.

4. Electrical power supply network according to one of Claims 1 to 3, **characterized in that** each electrical wire exiting a coupling box is connected to one and only one internal distribution bus.

5. Electrical power supply network (510) according to one of Claims 1 to 3, **characterized in that** a plurality of electrical wires exiting a coupling box are distributed in a common manner to at least two distribution boxes (511, 512, 513), and **in that** each of said at least two boxes comprises:
- an input switch (60, 70) with a plurality of parallel switching paths that are connected upstream each separately to one of said distributed wires (91-98), and are connected downstream in a grouped, sub-grouped or individual manner to a or to the internal distribution bus(es) (601-602, 701), an on state of each path being controlled and monitored by said driver processor (603, 703).

6. Electrical power supply network according to one of the preceding claims, **characterized in that** the operating modes of the vehicle comprise all or some of the modes from among parking mode, maintenance mode, logistics mode, driving mode, microhybridization mode, autonomous driving mode, and fault mode.

7. Electrical power supply network according to one of the preceding claims, **characterized in that** at least one distribution box (311, 511, 221) comprises a memory (404, 604, 704) which contains diagnostic instructions, and which can be accessed by the driver processor (403, 603) in order to perform diagnostic operations.

8. Electrical power supply network according to one of the preceding claims, **characterized in that** it comprises an onboard communication bus (80, 90), and a central onboard computer connected to the onboard communication bus, and **in that** each driver processor (403, 603, 703) and/or each control processor (509, 520) accesses the onboard communication bus in order to exchange information with the central onboard computer.

9. Electrical power supply network according to one of the preceding claims, **characterized in that** each driver processor (403, 603, 703) and/or each control processor (509, 520) executes a safety management procedure in the event of the vehicle being involved in a collision or of loss of the communication bus.

10. Electrical power supply network according to one of the preceding claims, **characterized in that** at least two distribution boxes (311, 312) each comprise a voltage sensor for detecting an undervoltage and/or an overvoltage on the internal distribution bus (401, 402).

11. Motor vehicle (100, 200) comprising an electrical power supply network (110, 210) according to one of the preceding claims.
